# EUROPÄISCHE PATENTSCHRIFT

(11) **EP 2 358 787 B1**
(45) Veröffentlichungstag und Bekanntmachung des Hinweises auf die Patenterteilung: **09.01.2013**
(21) Anmeldenummer: 09755880.3
(22) Anmeldetag: 12.11.2009
(51) Int. Cl.: C08G 65/00

(54) **VERFAHREN ZUR HERSTELLUNG EINES REAKTIVEN POLYARYLENETHERS**
METHOD FOR PREPARING A REACTIVE POLYARYLENE ETHER
PROCÉDÉ DE PRODUCTION D` ETHER DE POLYARYLÈNE RÉACTIF

(30) Priorität: 20.11.2008 EP 08169537
(43) Veröffentlichungstag der Anmeldung: 24.08.2011
(73) Patentinhaber: BASF SE, 67056 Ludwigshafen (DE)
(72) Erfinder: WEBER, Martin, 67487 Maikammer (DE); MALETZKO, Christian, 67122 Altrip (DE); LANGE, Gerhard, 69198 Schriesheim (DE); ERBES, Jörg, 76137 Karlsruhe (DE); DIETRICH, Matthias, 69469 Weinheim (DE); INCHAURRONDO, Nicolas, 68165 Mannheim (DE); KORTEKAMP, Tobias, 68159 Mannheim (DE); TROTTE, Bernd, 69502 Hemsbach (DE)
(86) Internationale Anmeldenummer: PCT/EP2009/065035
(87) Internationale Veröffentlichungsnummer: WO 2010/057822

(56) Entgegenhaltungen:
- EP-A2- 0 346 656
- WO-A1-01/25358
- WO-A1-2005/017041
- WO-A1-2007/059302

## Beschreibung

Die vorliegende Erfindung betrifft ein Verfahren zur Herstellung einer Polymerzusammensetzung umfassend
(a) die Bereitstellung mindestens eines Polymerylenethersultfon (P) mit überwiegend Phenolat-Endgruppen in Gegenwart eines Lösungsmittels (L),
(b) die Zugabe mindestens einer mehrfunktionellen Carbonsäure und (c) die Gewinnung der Polymerzusammensetzung als Feststoff.

Ebenfalls beschrieben sind nach dem Verfahren erhältliche Polymerzusammensetzungen, Mischungen, welche diese Polyarylenether enthalten und die Verwendung der Polymerzusammensetzungen zur Zähmodifierung von Epoxyharzen.

Polyarylenether gehören zur Gruppe der Hochleistungsthermoplaste und finden aufgrund ihrer hohen Wärmeform- und Chemikalienbeständigkeit Verwendung in hoch beanspruchten Anwendungen, siehe G. Blinne, M. Knoll, D. Müller, K. Schlichting, Kunststoffe 75, 219 (1985), E. M. Koch, H.-M. Walter, Kunststoffe 80, 1146 (1990) und D. Döring, Kunststoffe 80, 1149 (1990).

Aus der Literatur ist bekannt, dass funktionalisierte Polyarylenether als Zähmodifier duroplastischer Matrizes verwendet werden können (R.S. Raghava, J. Polym. Sci., Part B: Polym. Phys., 25, (1987) 1017; J.L. Hedrick, I. Yilgor, M. Jurek, J.C. Hedrick, G.L. Wilkes, J.E. McGrath, Polymer, 32 (1991) 2020).

Bevorzugt werden Polyarylenether mit phenolischen Endgruppen als Modifier in Epoxyharzen und Verbundwerkstoffen eingesetzt. Ein für diese Anwendung weit verbreitetes Produkt ist das Sumikaexcel ® 5003 P der Fa. Sumitomo. Die Herstellung dieses Produkts erfolgt durch Kondensation der entsprechenden Monomere in Diphenylsulfon sowie nachfolgende Aufreinigung des Materials durch Extraktion mit organischen Lösungsmitteln. Dieses Verfahren ist aufwendig und liefert zudem eine Polymerzusammensetzung, welche einen hohen Anteil an Phenolat-Endgruppen und damit an Kalium (> 700 ppm) aufweist, was für die weitere Verarbeitung nachteilig ist. Werden solche Polymerzusammensetzungen durch Fällung isoliert, dann entstehen feinteilige Niederschläge, welche für technische Prozesse nur aufwendig zu handhaben sind.

Die Herstellung der Polyarylenether erfolgt üblicherweise durch Polykondensation geeigneter Ausgangsverbindungen in dipolar-aprotischen Lösungsmitteln bei erhöhter Temperatur (R.N. Johnson et.al., J. Polym. Sci. A-1 5 (1967) 2375, J.E. McGrath et.al., Polymer 25 (1984) 1827).

Von McGrath et al., Polymer 30 (1989), 1552 ist weiterhin bekannt, dass nach Ablauf der Kondensationsreaktion der Anteil an Amino-Endgruppen durch Zusatz von Essigsäure bei der Aufarbeitung von Polyarylenethern reduziert werden kann.

Zusätze von Essigsäure und Mineralsäuren zu Polyarylenethern führen jedoch bei der Anwendung von hohen Temperaturen insbesondere bei der Verarbeitung oft zu verfärbten Produkten.

Aufgabe der vorliegenden Erfindung war die Bereitstellung eines Verfahrens zur Herstellung reaktiver, d. h. OHterminierter Polyarylenether. Es war dabei die Aufgabe der vorliegenden Erfindung, die genannten Nachteile des Standes der Technik zu vermeiden. Es war eine weitere Aufgabe der vorliegenden Erfindung, ein Verfahren zur Herstellung von OH-terminierten Polyarylenethern zur Verfügung zu stellen, bei dem das Produkt als gut handhabbarer Niederschlag anfällt. Die so erhältlichen Polymerzusammensetzungen sollten eine hohe Farb- und Temperaturstabilität aufweisen. Insbesondere sollten die OH-terminierten Polyarylenether bei Verarbeitung in der Schmelze möglichst wenig verfärben. Das Verfahren zu deren Herstellung sollte leicht durchführbar sein und eine hohe Polymerausbeute liefern.

Die vorgenannten Aufgaben werden gelöst durch das erfindungsgemäße Verfahren. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht.

Erfindungsgemäß umfasst das Verfahren zur Herstellung von Polyarylenethern folgende Schritte in der Reihenfolge a-b-c:
(a) Bereitstellung mindestens eines Polyarylenthersulfons (P), des aufgebaut ist aus Bausteinen der allgemeinen Formel I und überwiegend Phenolat-Endgruppen aufweist, in Gegenwart eines aprotisch polaren Lösemittels CL) 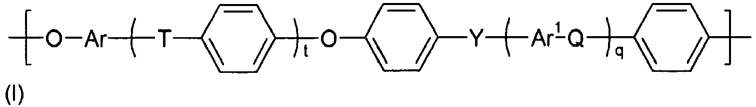 mit folgenden Bedeutungen
   - t, q:: unabhängig voneinander 0, 1, 2 oder 3,
   - Q, T, Y:: unabhängig voneinander jeweils eine chemische Bindung oder Gruppe, ausgewählt aus -O-, -S-, -SO₂-, S=O, C=O, -N=N-, -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei wenigstens eines aus Q, T und Y von -O- verschieden ist, und wenigstens eines aus Q, T und Y für -SO₂- steht und
   - Ar, Ar¹:: unabhängig voneinander eine Arylengruppe mit von 6 bis 18 Kohlenstoffatomen, wobei das Polyarrylenethersulfor (P) in Form einer Lösung in einem aprotischen polaren Lösemittel (L) bereitgestellt wird
(b) Zugabe mindestens einer mehrfunktionellen Carbonsäure, und
(c) Gewinnung der Polymerzusammensetzung als Feststoff.

Unter Phenolat-Endgruppen werden im Rahmen der vorliegenden Erfindung negativ geladene Sauerstoffatome in Form einer Endgruppe verstanden, die an einen aromatischen Kern gebunden sind. Diese Endgruppen leiten sich von den phenolischen Endgruppen durch Entfernung eines Protons ab. Unter phenolischer Endgruppe wird im Rahmen der vorliegenden Erfindung eine Hydroxygruppe verstanden, die an einen aromatischen Kern gebunden ist. Bei den genannten aromatischen Kernen handelt es sich vorzugsweise um 1,4-Phenylengruppen. Die Polyarylenether (P) der vorliegenden Erfindung können einerseits Phenolat- bzw. phenolische OH-Endgruppen und andererseits Halogenendgruppen aufweisen.

Die Polymerzusammensetzung der vorliegenden Erfindung besteht bevorzugt im Wesentlichen aus Polyarylenethern mit überwiegend phenolischen Endgruppen, d.h. aus OH-terminierten Polyarylenethern.

Unter dem Begriff "überwiegend Phenolat-Endgruppen" ist gemäß Ansprunch 1 zu verstehen, dass mehr als 50 % der vorhandenen Endgruppen Phenolat-Endgruppen sind. Entsprechend ist unter dem Begriff "überwiegend phenolische Endgruppen" zu verstehen, dass mehr als 50 % der vorhandenen Endgruppen phenolischer Art sind.

Die Bestimmung des Anteils der Phenolat-Endgruppen erfolgt vorzugsweise durch Bestimmung der OH-Endgruppen mittels potentiometrischer Titration und Bestimmung der organisch gebundenen Halogen-Endgruppen mittels Atomspektroskopie und anschließender Berechnung der jeweiligen Zahlenanteile in %. Entsprechende Methoden sind dem Fachmann bekannt. Alternativ kann die Bestimmung der Anteile der jeweiligen Endgruppen mittels ¹³C-Kernspinresonanzspektroskopie erfolgen.

In einer bevorzugten Ausführungsform (im folgenden als "AF-vz" gekennzeichnet) der vorliegenden Erfindung erfolgt die Bereitstellung des Polyarylenethers oder der Polyarylenether (P) mit überwiegend Phenolat- Endgruppen in Schritt (a) durch Umsetzung mindestens einer Ausgangsverbindung der Struktur X-Ar-Y (A1) mit mindestens einer Ausgangsverbindung der Struktur HO-Ar1-OH (A2) in Gegenwart eines Lösungsmittels (L) und einer Base (B), wobei
- Y ein Halogenatom ist,
- X ausgewählt wird aus Halogenatomen und OH und
- Ar und Ar¹ unabhängig voneinander eine Arylengruppe mit 6 bis 18 Kohlenstoffatomen darstellen.

Die bevorzugten Ausführungsformen der einzelnen Schritte des erfindungsgemäßen Verfahrens werden im Folgenden näher ausgeführt.

Gemäß Schritt (a) des erfindungsgemäßen Verfahrens wird mindestens ein Polyanylenethersulfon (P) in Gegenwart des Lösungsmittels (L) bereitgestellt, wobei des mindestens eine Polyarylenethersulfon (P) aus Bausteinen der allgemeinen Formel I mit den Bedeutungen wie oben definiert aufgebaut ist und überwiegend Phenolat-Endgruppen aufweist:

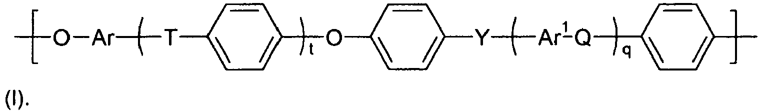

Der Polyarylenether (P) weist vorzugsweise mindestens 60 %, besonders bevorzugt mindestens 80 %, insbesondere mindestens 90 % Phenolat-Endgruppen bezogen auf die Gesamtzahl der Endgruppen auf.

Die Bereitstellung des Polyarylenethers (P) erfolgt dabei in Form einer Lösung im Lösungsmittel (L).

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel (II) allerdings unabhängig voneinander ausgewählt aus -O- und -SO₂, mit der Maßgabe, dass wenigstens eines aus der Gruppe bestehend aus Q, T und Y für -SO₂- steht.

Sofern Q, T oder Y -CRaR^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sec.-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel (I) unabhängig voneinander ausgewählt aus der Gruppe bestehend aus 1,4-Phenylen, 1,3-Phenylen, Naphthylen, insbesondere 2,7-Dihydroxynaphthalin, und 4,4'-Bisphenylen.

Im Rahmen des Polyarylenethers (P) vorzugsweise vorliegende Bausteine sind solche, die mindestens eine der folgenden wiederkehrenden Struktureinheiten Ia bis Io enthalten:

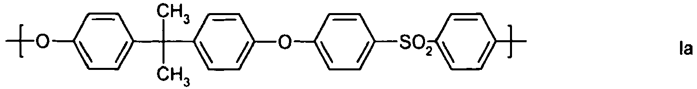

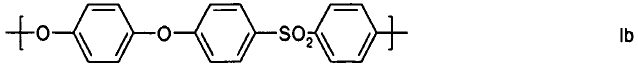

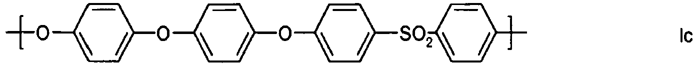

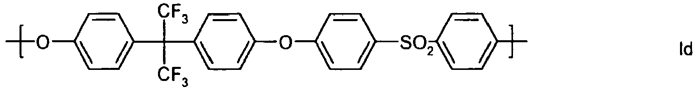

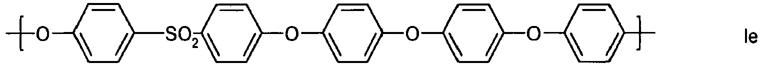

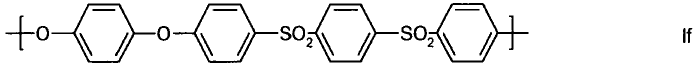

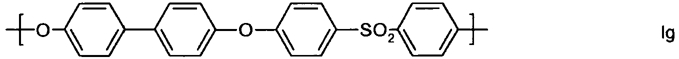

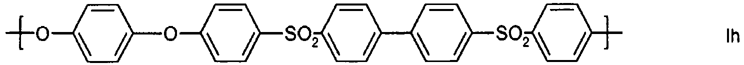

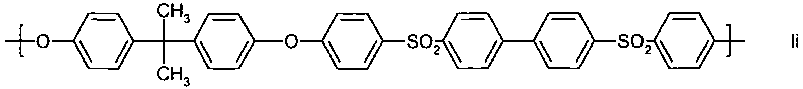

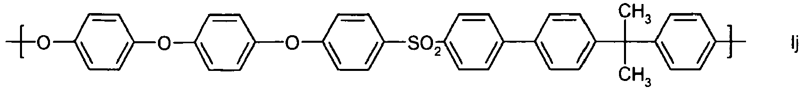

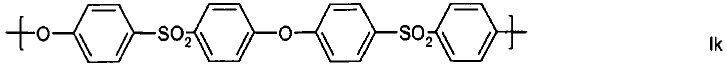

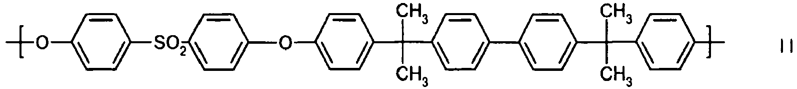

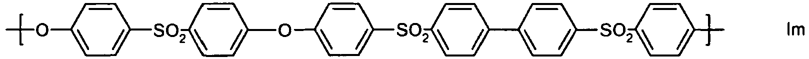

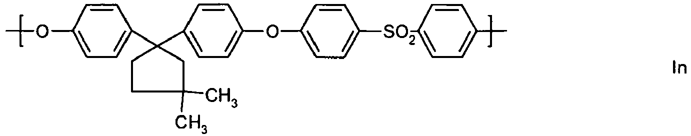

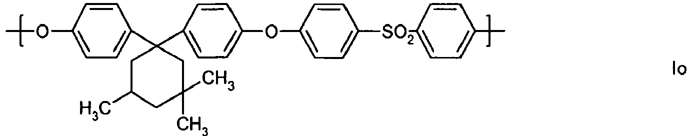

Zusätzlich zu den bevorzugt vorliegenden Bausteinen Ia bis Io sind auch solche Bausteine bevorzugt, in denen eine oder mehrere 1,4-Dihydroxyphenyl-Einheiten durch Resorcin- oder Dihydroxynaphthalin-Einheiten ersetzt sind.

Als Bausteine der allgemeinen Formel I besonders bevorzugt sind die Bausteine la, Ig und Ik. Es ist außerdem besonders bevorzugt, wenn die Polyarylenether der Polyarylenether (P) im Wesentlichen aus einer Sorte Bausteine der allgemeinen Formel I, insbesondere aus einem Baustein ausgewählt aus Ia, Ig und Ik aufgebaut sind.

In einer besonders bevorzugten Ausführungsform ist Ar = 1,4-Phenylen, t = 1, q = 0, T = SO₂ und Y = SO₂. Derartige Polyarylenether werden als Polyethersulfon (PESU) bezeichnet.

Abgesehen von den genannten wiederkehrenden Bausteinen ist für die vorliegende Erfindung die Struktur der Endgruppen wesentlich. Die Polyarylenether (P), welche im Rahmen von Schritt (a) bereitgestellt werden, weisen erfindungsgemäß überwiegend Phenolat-Endgruppen auf.

Die Phenolat-Endgruppen werden im Laufe des erfindungsgemäßen Verfahrens zu phenolischen Endgruppen umgesetzt. In der erfindungsgemäßen Polymerzusammensetzung weist der Polyarylenether somit phenolische Endgruppen auf.

Polyarylenether mit überwiegend phenolischen Endgruppen werden im Folgenden als reaktive Polyarylenether bezeichnet.

Vorzugsweise weisen die Polyarylenether (P) mittlere Molekulargewichte Mₙ (Zahlenmittel) im Bereich von 2.000 bis 60.000 g/mol, insbesondere 5.000 bis 40.000 g/mol, bestimmt mittels Gelpermeationschromatographie im Lösungsmittel Dimethylacetamid gegen engverteiltes Polymethylmethacrylat als Standard auf.

Vorzugsweise weisen die Polyarylenether (P) relative Viskositäten von 0,20 bis 0,95 dl/g, insbesondere von 0,30 bis 0,80 auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96-%iger Schwefelsäure bei jeweils 20 °C bzw. 25 °C gemessen.

Die Bereitstellung der beschriebenen Polyarylenether (P) kann im Prinzip auf verschiedene Weise erfolgen. Beispielsweise kann ein entsprechender Polyarylenether (P) direkt mit einem geeigneten Lösungsmittel in Kontakt gebracht und direkt, d. h. ohne weiter Umsetzung, im erfindungsgemäßen Verfahren eingesetzt werden. Alternativ können Präpolymere von Polyarylenethern eingesetzt und zur Umsetzung in Gegenwart eines Lösungsmittels gebracht werden, wobei die beschriebenen Polyarylenether (P) in Gegenwart des Lösungsmittels entstehen.

In einer bevorzugten Ausführungsform (AF-vz) der vorliegenden Erfindung werden die Polyarylenether (P) ausgehend von geeigneten Ausgangsverbindungen, insbesondere ausgehend von Monomeren in Gegenwart eines Lösungsmittels (L) und einer Base (B) hergestellt. Derartige Herstellungsmethoden sind dem Fachmann an sich bekannt.

Im Rahmen von Schritt (a) dieser bevorzugten Ausführungsform (AF-vz) erfolgt die Umsetzung von mindestens einer Ausgangsverbindung der Struktur X-Ar-Y (A1) mit mindestens einer Ausgangsverbindung der Struktur HO-Ar¹-OH (A2) in Gegenwart eines Lösungsmittels (L) und einer Base (B), wobei
- Y ein Halogenatom ist,
- X ausgewählt wird aus Halogenatomen und OH, vorzugsweise aus Halogenatomen, insbesondere F, Cl, oder Br und
- Ar und Ar¹ unabhängig voneinander eine Arylengruppe mit 6 bis 18 Kohlenstoffatomen darstellt.

Das Verhältnis von (A1) und (A2) wird dabei so gewählt, dass die Zahl der phenolischen bzw. Phenolat-Endgruppen die Zahl der Halogen-Endgruppen übersteigt.

Die bevorzugten Ausführungsformen dieser bevorzugten Ausführungsform (AF-vz) der vorliegenden Erfindung werden im Folgenden näher erläutert.

Im Rahmen von Stufe (a) dieser bevorzugten Ausführungsform (AF-vz) der Erfindung wird somit ein Polyarylenether hergestellt, welcher mit einem Lösungsmittel (L) in Kontakt steht und vorzugsweise darin gelöst ist.

Geeignete Ausgangsverbindungen sind dem Fachmann bekannt und unterliegen keiner prinzipiellen Einschränkung, sofern die genannten Substituenten im Rahmen einer nucleophilen aromatischen Substitution ausreichend reaktiv sind. Bei der Umsetzung im Rahmen von Schritt (a) handelt es sich gleichzeitig um eine Polykondensation unter rechnerischer Abspaltung von Halogenwasserstoff.

Bevorzugte Ausgangsverbindungen sind im Rahmen von AF-vz difunktionell. Difunktionell bedeutet dabei, dass die Zahl der in der nucleophilen aromatischen Substitution reaktiven Gruppen zwei pro Ausgangsverbindung beträgt. Ein weiteres Kriterium für eine geeignete difunktionelle Ausgangsverbindung ist eine ausreichende Löslichkeit im Lösungsmittel, wie weiter unten näher ausgeführt.

Bevorzugte Verbindungen (A2) sind demzufolge solche mit zwei phenolischen Hydroxygruppen.

Dem Fachmann ist bekannt, dass die Umsetzung der phenolischen OH-Gruppen vorzugsweise in Gegenwart einer Base erfolgt, um die Reaktivität gegenüber den Halogensubstituenten der Ausgangsverbindung (A1) zu erhöhen.

Bevorzugt sind monomere Ausgangsverbindungen, d.h. Schritt (a) wird vorzugsweise ausgehend von Monomeren und nicht ausgehend von Präpolymeren durchgeführt.

Vorzugsweise wird als Ausgangsverbindung (A1) ein Dihalogendiphenylsulfon verwendet. Vorzugsweise wird als Ausgangsverbindung (A2) Dihydroxydiphenylsulfon verwendet.

Geeignete Ausgangsverbindungen (A1) sind insbesondere Dihalogendiphenylsulfone wie 4,4'-Dichlordiphenylsulfon, 4,4'-Difluordiphenylsulfon, 4,4'-Dibromdiphenylsulfon, bis(2-chlorophenyl)sulfone, 2,2'-Dichlordiphenylsulfon und 2,2'-Difluordiphenylsulfon, wobei 4,4'-Dichlordiphenylsulfon und 4,4'-Difluordiphenylsulfon besonders bevorzugt sind.

Bevorzugte Ausgangsverbindungen (A2) mit zwei phenolischen Hydroxygruppen werden aus folgenden Verbindungen ausgewählt:
- Dihydroxybenzole, insbesondere Hydrochinon und Resorcin;
- Dihydroxynaphthaline, insbesondere 1,5-Dihydroxynaphthalin, 1,6- Dihydroxynaphthalin, 1,7- Dihydroxynaphthalin, und 2,7- Dihydroxynaphthalin;
- Dihydroxybiphenyle, insbesondere 4,4'-Biphenol und 2,2'-Biphenol;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethane, insbesondere Bis(4-hydroxyphenyl)methan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und
- Bisphenylfluorene, insbesondere 9,9-Bis(4-hydroxyphenyl)fluoren.

Es ist bevorzugt ausgehend von den vorgenannten aromatischen Dihydroxyverbindungen (A2) durch Zugabe einer Base (B) ihre Dikalium- oder Dinatriumsalze herzustellen und mit der Ausgangsverbindung (A1) zur Reaktion zu bringen. Die vorgenannten Verbindungen können zudem einzeln oder als Kombination zwei oder mehrerer der vorgenannten Verbindungen eingesetzt werden.

Hydrochinon, Resorcin, Dihydroxynaphthalin, insbesondere 2,7- Dihydroxynaphthalin, und 4,4'-Bisphenol sind als Ausgangsverbindung (A2) besonders bevorzugt.

Es ist jedoch auch möglich, trifunktionelle Verbindungen zu verwenden. In diesem Fall entstehen verzweigte Strukturen. Sofern eine trifunktionelle Ausgangsverbindung (A2) zum Einsatz kommt ist 1,1,1-Tris(4-hydroxyphenylethan) bevorzugt.

Die einzusetzenden Mengenverhältnisse ergeben sich im Prinzip aus der Stöchiometrie der ablaufenden Polykondensationsreaktion unter rechnerischer Abspaltung von Chlorwasserstoff und werden vom Fachmann in bekannter Weise eingestellt. Um jedoch die Zahl der phenolischen OH-Endgruppen zu erhöhen, ist ein Überschuss an OH-Endgruppen zu bevorzugen.

Die Herstellung von Polyarylethern bei gleichzeitiger Steuerung der Endgruppen ist dem Fachmann an sich bekannt und wird weiter unten näher beschrieben. Die bekannten Polyarylenether weisen üblicherweise phenolische Halogen-, insbesondere -F oder -Cl, oder phenolische OH- bzw. O-Endgruppen auf, wobei letztere im Stand der Technik üblicherweise weiter umgesetzt werden, insbesondere zu CH₃O-Gruppen.

Für die Einstellung der Zahl der phenolischen Endgruppen stehen dem Fachmann unterschiedliche Verfahren zur Verfügung.

Die Einstellung des Verhältnisses von Halogen-Endgruppen zu phenolischen Endgruppen erfolgt in einer bevorzugten Ausführungsform durch gezielte Einstellung eines Überschusses der difunktionellen Ausgangsverbindung (A2) in Bezug auf eine Dihalogenverbindung als Ausgangsverbindung (A1), d.h. X=Y=Halogen.

Besonders bevorzugt beträgt das Molverhältnis (A2)/(A1) in dieser Ausführungsform von 1,005 bis 1,2, insbesondere 1,01 bis 1,15, ganz besonders bevorzugt 1,02 bis 1,1.

Alternativ kann auch eine Ausgangsverbindung (A1) mit X = Halogen und Y = OH eingesetzt werden. In diesem Fall erfolgt die Einstellung eines Überschusses von Hydroxygruppen durch Zugabe der Ausgangsverbindung (A2). In diesem Fall beträgt das Verhältnis der eingesetzten phenolischen Endgruppen zu Halogen vorzugsweise von 1,01 bis 1,2, insbesondere 1,03 bis 1,15, ganz besonders bevorzugt 1,05 bis 1,1.

Vorzugsweise beträgt der Umsatz bei der Polykondensation im Rahmen von AF-vz gemäß Schritt (a) im Rahmen der bevorzugten Ausführungsform mindestens 0,9, wodurch ein ausreichend hohes Molekulargewicht gewährleistet wird. Sofern als Vorstufe des Polyarylenethers ein Präpolymer verwendet wird, bezieht sich der Polymerisationsgrad auf die Zahl der eigentlichen Monomere.

Im Rahmen der vorliegenden Erfindung ist das Lösungsmittel (L) ein aprotisches polares Lösungsmittel. Geeignete Lösungsmittel weisen außerdem einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, Sulfolan und N-Methyl-2-pyrrolidon.

Ein bevorzugtes Lösungsmittel ist insbesondere N-Methyl-2-pyrrolidon.

Vorzugsweise erfolgt die Umsetzung der Ausgangsverbindungen (A1) und (a2) in den genannten aprotischen polaren Lösungsmitteln (L), insbesondere N-Methyl-2-pyrrolidon.

Im Rahmen der bevorzugten Ausführungsform AF-vz erfolgt die Umsetzung der Ausgangsverbindungen (A1) und (A2) in Gegenwart einer Base (B).

Vorzugsweise sind die Basen wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist, insbesondere Kaliumcarbonat mit einer volumengewichteten mittleren Teilchengröße von weniger als 100 Mikrometer, bestimmt mit einem Partikelgrößenmessgerät in einer Suspension in N-Methyl-2-pyrrolidon.

Eine besonders bevorzugte Kombination ist N-Methyl-2-pyrrolidon als Lösungsmittel (L) und Kaliumcarbonat als Base (B).

Die Umsetzung der geeigneten Ausgangsverbindungen (A1) und (A2) wird bei einer Temperatur von 80 bis 250 °C, bevorzugt 100 bis 220 °C durchgeführt, wobei die Obergrenze der Temperatur durch den Siedepunkt des Lösungsmittels bestimmt wird.

Die Umsetzung erfolgt vorzugsweise in einem Zeitintervall von 2 bis 12 h, insbesondere von 3 bis 8 h.

Es hat sich als vorteilhaft erwiesen, in Anschluss an Schritt (a) des erfindungsgemäßen Verfahrens, insbesondere im Rahmen der bevorzugten Ausführungsform AF-vz, und vor Ausführung des Schrittes (b) eine Filtration der Polymerlösung durchzuführen. Hierdurch wird der bei der Polykondensation gebildete Salzanteil sowie eventuell gebildete Gelkörper entfernt.

Es hat sich zudem als vorteilhaft herausgestellt, im Rahmen von Schritt (a) die Menge des Polyarylenethers (P) bezogen auf das Gesamtgewicht der Mischung aus Polyarylenether (P) und Lösungsmittel (L) von 10 bis 70 Gew.-%, vorzugsweise von 15 bis 50 Gew.-% einzustellen.

Im Rahmen von Schritt (b) des erfindungsgemäßen Verfahrens erfolgt die Zugabe mindestens einer mehrfunktionellen Carbonsäure zum Polyarylenether (P) aus Schritt (a), vorzugsweise zur Lösung des Polyarylenethers (P) im Lösungsmittel (L).

Unter "mehrfunktionell" ist eine Funktionalität von mindestens 2 zu verstehen. Die Funktionalität ist die (gegebenenfalls mittlere) Zahl an COOH-Gruppen pro Molekül. Unter mehrfunktionell wird eine Funktionalität von zwei oder höher verstanden. Im Rahmen der vorliegenden Erfindung bevorzugte Carbonsäuren sind di- und trifunktionelle Carbonsäuren.

Die Zugabe der mehrfunktionellen Carbonsäure kann auf verschiedene Weise erfolgen, insbesondere in fester oder flüssiger Form oder in Form einer Lösung, vorzugsweise in einem Lösungsmittel, welches mit dem Lösungsmittel (L) mischbar ist.

Vorzugsweise weist die mehrfunktionelle Carbonsäure ein zahlenmittleres Molekulargewicht von höchstens 1500 g/mol, insbesondere höchstens 1200 g/mol auf. Gleichzeitig weist die mehrfunktionelle Carbonsäure vorzugsweise ein zahlenmittleres Molekulargewicht von mindestens 90 g/mol auf.

Geeignete mehrfunktionelle Carbonsäuren sind insbesondere solche gemäß der allgemeinen Struktur II:

HOOC-R-COOH (II),

wobei R ein Kohlenwasserstoffrest mit von 2 bis 20 Kohlenstoffatomen repräsentiert, der optional weitere funktionelle Gruppen, vorzugsweise ausgewählt aus OH und COOH, enthält.

Bevorzugte mehrfunktionelle Carbonsäuren sind C₄ bis C₁₀-Dicarbonsäuren, insbesondere Bernsteinsäure, Glutarsäure, Adipinsäure, und Tricarbonsäuren, insbesondere Zitronensäure.

Besonders bevorzugte mehrfunktionelle Carbonsäuren sind Bernsteinsäure und Zitronensäure.

Um eine ausreichende Umwandlung der Phenolat-Endgruppen in phenolische Endgruppen zu gewährleisten hat es sich als vorteilhaft erwiesen, die Menge der eingesetzten mehrfunktionellen Carbonsäure oder mehrfunktionellen Carbonsäuren in Bezug auf die Menge der Phenolat-Endgruppen einzustellen.

Es ist bevorzugt im Rahmen von Schritt (b) des erfindungsgemäßen Verfahrens eine mehrfunktionellen Carbonsäure in einer Menge von 25 bis 200 mol-% Carboxylgruppen, vorzugsweise von 50 bis 150 mol-% Carboxylgruppen, besonders bevorzugt von 75 bis 125 mol-% Carboxylgruppen, bezogen auf die Stoffmenge an Phenolat- bzw. phenolische Endgruppen bestimmt zuzugeben.

Wird zu wenig Säure dosiert, ist das Fällverhalten der Polymerlösung ungenügend, während bei einer deutlichen Überdosierung eine Verfärbung des Produktes bei der weiteren Verarbeitung auftreten kann.

Die Bestimmung der Stoffmenge an Phenolat- bzw. phenolischen Endgruppen erfolgt mittels potentiometrischer Titration der phenolischen OH-Gruppen einerseits und Bestimmung der organisch gebundenen Halogen-Endgruppen mittels Atomspektroskopie andererseits, woraus der Fachmann das zahlenmittlere Molekulargewicht und die vorliegende Stoffmenge Phenolat-Endgruppen bzw. phenolische Endgruppen bestimmt.

Im Rahmen von Schritt (c) des erfindungsgemäßen Verfahrens erfolgt die Gewinnung der Polymerzusammensetzung als Feststoff.

Grundsätzlich kommen verschiedene Verfahren zur Gewinnung als Feststoff in Betracht. Bevorzugt ist jedoch eine Gewinnung der Polymerzusammensetzung durch Ausfällung.

Die bevorzugte Ausfällung kann insbesondere durch Mischung des Lösungsmittels (L) mit einem schlechten Lösungsmittel (L') erfolgen. Ein schlechtes Lösungsmittel ist ein Lösungsmittel, in dem sich die Polymerzusammensetzung nicht löst. Ein solches schlechtes Lösungsmittel ist vorzugsweise ein Gemisch aus einem Nicht-Lösungsmittel und einem Lösungsmittel. Ein bevorzugtes Nicht-Lösungsmittel ist Wasser. Ein bevorzugtes Gemisch (L') aus einem Lösungsmittel mit einem Nicht-Lösungsmittel ist vorzugsweise ein Gemisch aus dem Lösungsmittel (L), insbesondere N-Methyl-4-pyrrolidon, und Wasser. Es ist bevorzugt, die Polymerlösung aus Schritt (b) zu dem schlechten Lösungsmittel (L') hinzuzugeben, was zur Ausfällung der Polymerzusammensetzung führt. Dabei wird vorzugsweise ein Überschuss des schlechten Lösungsmittels eingesetzt. Besonders bevorzugt erfolgt die Zugabe der Polymerlösung aus Schritt (a) in fein verteilter Form, insbesondere in Tropfenform.

Sofern als schlechtes Lösungsmittel (L') eine Mischung aus dem Lösungsmittel (L), insbesondere N-Methyl-2-pyrollidon, und einem Nicht-Lösungsmittel, insbesondere Wasser, verwendet wird, dann ist ein Mischungsverhältnis Lösungsmittel:Nichtlösungsmittel von 1:2 bis 1:100, insbesondere 1:3 bis 1:50 zu bevorzugen.

Als schlechtes Lösungsmittel (L') ist eine Mischung aus Wasser und N-Methyl-2-pyrrolidon (NMP) in Kombination mit N-Methyl-2-pyrrolidon als Lösungsmittel (L) bevorzugt. Besonders bevorzugt ist als schlechtes Lösungsmittel (L') ein Gemisch NMP/Wasser von 1:3 bis 1:50, insbesondere 1:4 bis 1:30.

Die Ausfällung erfolgt besonders effizient, wenn der Gehalt der Polymerzusammensetzung im Lösungsmittel (L) bezogen auf das Gesamtgewicht der Mischung aus Polymerzusammensetzung und Lösungsmittel (L) von 10 bis 50 Gew.-%, vorzugsweise von 15 bis 35 Gew.-% beträgt.

Die Reinigung der Polyarylenether-Copolymere erfolgt nach dem Fachmann bekannten Methoden, beispielsweise Waschen mit geeigneten Lösungsmitteln, in denen die Polyarylenether-Copolymere bevorzugt größtenteils unlöslich sind.

Wie bereits weiter oben beschrieben, besteht die Polymerzusammensetzung im Wesentlichen aus den Bausteinen des Polyarylenethers oder der Polyarylenether (P), dessen überwiegend Phenolat- Endgruppen als phenolische Endgruppen vorliegen, d.h. OH-terminiert.

Vorzugsweise beträgt der Anteil der phenolischen Endgruppen der Polymerzusammensetzung des vodiegenden erfindungsgemäßen Verfahrens mindestens 0,1 Gew.-% OH berechnet als Gewichtsmenge OH bezogen auf die Gesamtmenge der Polymerzusammensetzung, insbesondere mindestens 0,12 Gew.-%, besonders bevorzugt mindestens 0,15 Gew.-%.

Die Bestimmung der phenolischen Endgruppen als Gewichtsmenge OH in Bezug auf die Gesamtmenge des Polyarylenethers erfolgt mittels potentiometrischer Titration. Hierfür wird das Polymer in Dimethylformamid gelöst und mit einer Lösung von Tetrabutylammoniumhydroxid in Toluol/Methanol titriert. Die Endpunktserfassung erfolgt potentiometrisch.

Die Polymerzusammensetzung weist vorzugsweise einen Kaliumgehalt von höchstens 600 ppm auf. Der Kaliumgehalt wird im Rahmen der vorliegenden Erfindung mittels Atomspektrometrie bestimmt.

Ebenfalls beschrieben sind Mischungen, vorzugsweise Reaktivharze, insbesondere Epoxyharze, enthaltend die Polymerzusammensetzungen.

Derartige Reaktivharze sind dem Fachmann bekannt und bestehen aus reaktiven Polymeren, die je nach Reaktionsführung unter Zugabe geeigneter Härter einen duroplastischen Kunststoff von hoher Festigkeit und chemischer Beständigkeit ergeben.

Die Verwendung der Polymerzusammensetzungen zur Zähmodifizierung von Reaktivharzen, insbesondere Epoxyharzen, ist bevorzugt.

Die folgenden Beispiele erläutern die Erfindung näher, ohne sie einzuschränken.

### Beispiele

Die Viskositätszahl der Polyarylenether (P) wurde in 1 %-iger Lösung in N-Methyl-2-pyrrolidon bei 25°C nach ISO 1628 bestimmt. Der Anteil an OH-Gruppen wurde durch potentiometrische Titration mit bestimmt. Der Kalium-Anteil wurde durch Atomspektrometrie ermittelt.

Die Beurteilung der Fällung erfolgt nach folgenden Kriterien:
- Verfärbung des Fällmediums NMP/Wasser
- Trübung des Fällmediums 1 Minute nach Abschalten des Rührers
- Ausbeute an Polymer

Die Fällung erfolgte durch tropfenweise Zugabe einer Polymerlösung mit einem Polymergehalt zwischen 20 und 22 Gew.-% in einer Mischung aus Wasser/NMP im Verhältnis 80/20 bei Raumtemperatur.

Zur Beurteilung der Farbstabilität wurden die Produkte unter Luft auf 200°C erwärmt und die eintretende Veränderung semiquantitativ gemäß ++,+,0,- und - klassifiziert.

### Vergleichsbeispiel V1: Synthese OH-PES-OH mit Mₙ=25.000 g/mol

Der Polyarylenether (P-1) wurde durch nucleophile aromatische Polykondensation von 574,16 g Dichlordiphenylsulfon, 509,72 g Dihydroxydiphenylsulfon, unter Einwirkung von 290,24 g Kaliumcarbonat in 1000 ml NMP erhalten. Diese Mischung wurde 6 Stunden unter Stickstoffatmosphäre bei 190°C gehalten. Danach wurde der Ansatz durch Zugabe von 1000 ml NMP verdünnt, die festen Bestandteile wurden durch Filtration abgetrennt und das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 55,2 ml/g.

### Beispiel 2: Synthese OH-PES-OH mit Mₙ=25.000 g/mol

Der Polyarylenether (P-2) wurde durch nucleophile aromatische Polykondensation von 574,16 g Dichlordiphenylsulfon, 509,72 g Dihydroxydiphenylsulfon, unter Einwirkung von 290,24 g Kaliumcarbonat in 1000 ml NMP erhalten. Diese Mischung wurde 6 Stunden unter Stickstoffatmosphäre bei 190°C gehalten. Danach wurde der Ansatz durch Zugabe von 1000 ml NMP verdünnt, die festen Bestandteile wurden durch Filtration abgetrennt. Anschließend wurden bei 80°C 5,54 g Bernsteinsäure zugegeben und 30 Minuten gerührt. Das Polymere wurde dann durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 54,9 ml/g.

### Vergleichsbeispiel V3: Synthese OH-PES-OH mit Mₙ=20.000 g/mol

Der Polyarylenether (P-3) wurde durch nucleophile aromatische Polykondensation von 574,16 g Dichlordiphenylsulfon, 512,09 g Dihydroxydiphenylsulfon, unter Einwirkung von 290,24 g Kaliumcarbonat in 1000 ml NMP erhalten. Diese Mischung wurde 6 Stunden bei 190°C gehalten. Danach wurde der Ansatz durch Zugabe von 1000 ml NMP verdünnt, die festen Bestandteile wurden durch Filtration abgetrennt. Anschließend wurde das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 52,5 ml/g.

### Beispiel 4: Synthese OH-PES-OH mit Mₙ=20.000 g/mol

Der Polyarylenether (P-4) wurde durch nucleophile aromatische Polykondensation von 574,16 g Dichlordiphenylsulfon, 512,09 g Dihydroxydiphenylsulfon, unter Einwirkung von 290,24 g Kaliumcarbonat in 1000 ml NMP erhalten. Diese Mischung wurde 6 Stunden bei 190°C gehalten. Danach wurde der Ansatz durch Zugabe von 1000 ml NMP verdünnt, die festen Bestandteile wurden durch Filtration abgetrennt. Anschließend wurden bei 80°C 6,2 g Bernsteinsäure zugegeben und 30 Minuten gerührt. Danach wurde das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 52,6 ml/g.

### Vergleichsbeispiel V5: Synthese OH-PES-OH mit Mₙ=20.000 g/mol

Der Polyarylenether (P-5) wurde durch nucleophile aromatische Polykondensation von 574,16 g Dichlordiphenylsulfon, 512,09 g Dihydroxydiphenylsulfon, unter Einwirkung von 290,24 g Kaliumcarbonat in 1000 ml NMP erhalten. Diese Mischung wurde 6 Stunden bei 190°C gehalten. Danach wurde der Ansatz durch Zugabe von 1000 ml NMP verdünnt, die festen Bestandteile wurden durch Filtration abgetrennt. Anschließend wurden bei 80°C 8,13 ml Phosphorsäure (85 %-ig) zugegeben und 30 Minuten gerührt. Danach wurde das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 52,4 ml/g.

### Beispiel 6: Synthese OH-PES-OH mit Mₙ=20.000 g/mol

Der Polyarylenether (P-6) wurde durch nucleophile aromatische Polykondensation von 574,16 g Dichlordiphenylsulfon, 512,09 g Dihydroxydiphenylsulfon, unter Einwirkung von 290,24 g Kaliumcarbonat in 1000 ml NMP erhalten. Diese Mischung wurde 6 Stunden bei 190°C gehalten. Danach wurde der Ansatz durch Zugabe von 1000 ml NMP verdünnt, die festen Bestandteile wurden durch Filtration abgetrennt. Anschließend wurden bei 80°C 10,1 g Zitronensäure zugegeben und 30 Minuten gerührt. Danach wurde das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 52,6 ml/g.

### Vergleichsbeispiel V7: Synthese OH-PES-OH mit Mn=15.000 g/mol, V7

Der Polyarylenether (P-7) wurde durch nucleophile aromatische Polykondensation von 574,16 g Dichlordiphenylsulfon, 516,07 g Dihydroxydiphenylsulfon, unter Einwirkung von 290,24 g Kaliumcarbonat in 1000 ml NMP erhalten. Diese Mischung wurde 6 Stunden bei 190°C gehalten. Danach wurde der Ansatz durch Zugabe von 1000 ml NMP verdünnt, die festen Bestandteile wurden durch Filtration abgetrennt. Anschließend wurde das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 38,3 ml/g.

### Beispiel 8: Synthese OH-PES-OH mit Mn=15.000 g/mol

Der Polyarylenether (P-8) wurde durch nucleophile aromatische Polykondensation von 574,16 g Dichlordiphenylsulfon, 512,09 g Dihydroxydiphenylsulfon, unter Einwirkung von 290,24 g Kaliumcarbonat in 1000 ml NMP erhalten. Diese Mischung wurde 6 Stunden bei 190°C gehalten. Danach wurde der Ansatz durch Zugabe von 1000 ml NMP verdünnt, die festen Bestandteile wurden durch Filtration abgetrennt. Anschließend wurden bei 80°C 13,1 g Zitronensäure zugegeben und 30 Minuten gerührt. Danach wurde das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 39,4 ml/g.

### Vergleichsbeispiel V9: Synthese OH-PES-OH mit Mn=15.000 g/mol

Der Polyarylether (P-7) wurde durch nucleophile aromatische Polykondensation von 574,16 g Dichlordiphenylsulfon, 516,07 g Dihydroxydiphenylsulfon, unter Einwirkung von 290,24 g Kaliumcarbonat in 1000 ml NMP erhalten. Diese Mischung wurde 6 Stunden bei 190°C gehalten. Danach wurde der Ansatz durch Zugabe von 1000 ml NMP verdünnt, die festen Bestandteile wurden durch Filtration abgetrennt. Anschließend wurden bei 80°C 0,81 ml konzentrierter HCl zugegeben und für 30 Minuten gerührt. Dann wurde das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 40,2 ml/g.

### Vergleichsbeispiel V10: Synthese OH-PES-OH mit Mn=15.000 g/mol

Der Polyarylenether (P-7) wurde durch nucleophile aromatische Polykondensation von 574,16 g Dichlordiphenylsulfon, 516,07 g Dihydroxydiphenylsulfon, unter Einwirkung von 290,24 g Kaliumcarbonat in 1000 ml NMP erhalten. Diese Mischung wurde 6 Stunden bei 190°C gehalten. Danach wurde der Ansatz durch Zugabe von 1000 ml NMP verdünnt, die festen Bestandteile wurden durch Filtration abgetrennt. Anschließend wurden bei 80°C 0,79 ml 96%-ige Essigsäure zugegeben und für 30 Minuten gerührt. Dann wurde das Polymere durch Fällung in NMP/Wasser 1/4 isoliert. Nach sorgfältigem Waschen mit Wasser wurde das Produkt im Vakuum bei 120°C für 12 h getrocknet. Die Viskositätszahl des Produkts lag bei 39,7 ml/g.

Tabelle 1:

| Beispiel | V1 | 2 | V3 | 4 | V5 | 6 | V7 | 8 | V9 | V10 |
|---|---|---|---|---|---|---|---|---|---|---|
| Ergebnisse der Fällung Verfärbung | -- | 0 | -- | 0 | 0 | 0 | -- | 0 | -- | - |
| Trübung | -- | 0 | -- | 0 | 0 | 0 | --- | - | 0 | 0 |
| Ausbeute[%] | 96,4 | 98,8 | 95,7 | 96,9 | 96,7 | 97,0 | 94,9 | 96,1 | 96,9 | 95,6 |

Ergebnisse der Wärmelagerung:

| | | | | | | | | | | |
|---|---|---|---|---|---|---|---|---|---|---|
| Ausgangsfarbe | 0 | + | 0 | + | 0 | + | 0 | + | - | - |
| Farbe nach 24 h bei 200°C | 0 | 0 | - | 0 | - | 0 | - | 0 | - | - |
| K-Gehalt [ppm] | 420 | 280 | 410 | 260 | 470 | 280 | 570 | 310 | 270 | 320 |

| | | | | | | | | | | |
|---|---|---|---|---|---|---|---|---|---|---|
| Skala von ++ (sehr gutes Ergebnis) bis - (sehr schlechtes Ergebnis) | | | | | | | | | | |

Die Polymerzusammensetzungen weisen eine hohe Temperatur- und Farbstabilität auf. Die Verfärbung und Trübung ist gegenüber der Verwendung von Essigsäure oder Mineralsäuren deutlich verringert. Die Polymerzusammensetzungen weisen außerdem einen deutlich verringerten Kaliumanteil auf.

## Patentansprüche

1. Verfahren zur Herstellung einer Polymerzusammensetzung umfassend folgende Schritte in der Reihenfolge a - b - c:
(a) Bereitstellung mindestens eines Polyarylenethersulfons (P), das aufgebaut ist aus Bausteinen der allgemeinen Formel I und in dem mehr als 50 % der vorhandenen Endgruppen Phenolat-Endgruppen sind, in Gegenwart eines aprotisch polaren Lösungsmittels (L) 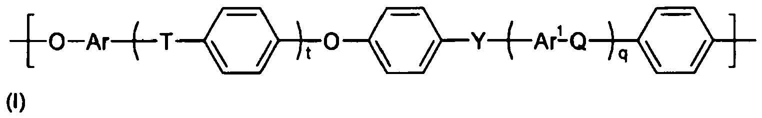 mit folgenden Bedeutungen
t, q: unabhängig voneinander 0, 1, 2 oder 3,
Q, T, Y: unabhängig voneinander jeweils eine chemische Bindung oder Gruppe, ausgewählt aus -O-, -S-, -SO₂-, S=O, C=O, -N=N-, -CR^{a}R^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei wenigstens eines aus Q, T und Y von -O- verschieden ist, und wenigstens eines aus Q, T und Y für -SO₂- steht und
Ar, Ar¹: unabhängig voneinander eine Arylengruppe mit von 6 bis wobei das Polyarylenethersulfon (P) in Form einer Lösung in einem aprotische polaren Lösungsmittel bereitgestellt wird
(b) Zugabe mindestens einer mehrfunktionellen Carbonsäure und
(c) Gewinnung der Polymerzusammensetzung als Feststoff.

2. Verfahren nach Anspruch 1, wobei Ar = 1,4-Phenylen, t = 1, q = 0, T = SO₂ und Y = SO₂.

3. Verfahren nach den Ansprüchen 1 oder 2, wobei mindestens 80 % der Endgruppen des Polyarylenethers oder der Polyarylenether (P) Phenolat-Endgruppen sind.

4. Verfahren zur Herstellung einer Polymerzusammensetzung gemäß den Ansprüchen 1 bis 3, wobei die Bereitstellung des Polyarylenethers oder der Polyarylenether (P) in Schritt (a) durch Umsetzung mindestens einer Ausgangsverbindung der Struktur X-Ar-Y (A1) mit mindestens einer Ausgangsverbindung der Struktur HO-Ar¹-OH (A2) in Gegenwart eines Lösungsmittels (L) und einer Base (B) erfolgt, wobei
- Y ein Halogenatom ist,
- X ausgewählt wird aus Halogenatomen und OH und
- Ar und Ar¹ unabhängig voneinander eine Arylengruppe mit 6 bis 18 Kohlenstoffatomen darstellen.

5. Verfahren nach den Ansprüchen 1 bis 4, wobei gemäß Schritt (b) mindestens eine mehrfunktionelle Carbonsäure ausgewählt aus Bernsteinsäure und Zitronensäure zugegeben wird.

6. Verfahren nach den Ansprüchen 1 bis 5, wobei als Lösungsmittel (L) N-Methyl-2-pyrrolidon verwendet wird.

7. Verfahren nach den Ansprüchen 1 bis 6, wobei in Schritt (c) die Gewinnung der Polymerzusammensetzung als Feststoff durch eine Ausfällung des Polyarylenethers (P) erfolgt.

8. Verfahren nach den Ansprüchen 1 bis 7, wobei in Schritt (c) die Gewinnung der Polymerzusammensetzung als Feststoff durch Ausfällung infolge der Zugabe der Lösung aus Schritt (b) zu einem Gemisch aus Wasser und N-Methlypyrrolidon erfolgt.

9. Verfahren nach den Ansprüchen 1 bis 8, wobei in Anschluss an Stufe (a) und vor Stufe (b) eine Filtration der Polymerlösung durchgeführt wird.

10. Verfahren nach den Ansprüchen 1 bis 9, wobei die Menge der zugegebenen mehrfunktionellen Carbonsäure von 25 bis 200 mol-% bezogen auf die Stoffmenge an phenolischen Endgruppen in dem Polyarylenether (P) beträgt.

11. Verfahren nach den Ansprüchen 4 bis 10, wobei das Molverhältnis der Ausgangsverbindungen A2 / A1 zu Beginn der Umsetzung gemäß Schritt (a) von 1,005 bis 1,2 beträgt.

12. Verfahren nach den Ansprüchen 1 bis 11, wobei die mehrfunktionelle Carbonsäure ein zahlenmittleres Molekulargewicht von 90 bis 1500 g/mol aufweist.

## Claims

1. A process for the preparation of a polymer composition comprising the following steps in the sequence a - b - c:
(a) provision of at least one polyarylene ether sulfone (P) which is composed of building blocks of the general formula I and in which more than 50% of the terminal groups present are terminal phenolate groups in the presence of an aprotically polar solvent (L) 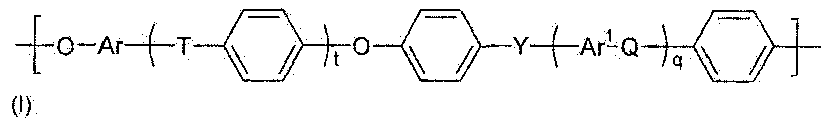 with the following meanings
t, q: independently of one another 0, 1, 2 or 3,
Q, T, Y: independently of one another in each case a chemical bond or group selected from -O-, -S-, -SO₂-, S=O, C=O, -N=N-, -CR^{a}R^{b-}, where R^{a} and R^{b}, independently of one another, are in each case a hydrogen atom or a C₁-C₁₂-alkyl, C₁-C₁₂-alkoxy or C₆-C₁₈-aryl group, at least one of Q, T and Y not being -O- and at least one of Q, T and Y being -SO₂-, and
Ar, Ar¹: independently of one another an arylene group having 6 to 18 carbon atoms,
the polyarylene ether sulfone (P) being provided in the form of a solution in an aprotically polar solvent,
(b) addition of at least one polyfunctional carboxylic acid and
(c) isolation of the polymer composition as a solid.

2. The process according to claim 1, where Ar = 1,4-phenylene, t = 1, q = 0, T = SO₂ and Y = SO₂.

3. The process according to claim 1 or 2, at least 80% of the terminal groups of the polyarylene ether or of the polyarylene ethers (P) being terminal phenolate groups.

4. The process for the preparation of a polymer composition according to claims 1 to 3, the provision of the polyarylene ether or of the polyarylene ethers (P) in step (a) being effected by reaction of at least one starting compound of the structure X-Ar-Y (A1) with at least one starting compound of the structure HO-Ar¹-OH (A2) in the presence of a solvent (L) and of a base (B), where
- Y is a halogen atom,
- X is selected from halogen atoms and OH and
- Ar and Ar¹, independently of one another, are an arylene group having 6 to 18 carbon atoms.

5. The process according to claims 1 to 4, according to step (b) at least one polyfunctional carboxylic acid selected from succinic acid and citric acid being added.

6. The process according to claims 1 to 5, the solvent (L) used being N-methyl-2-pyrrolidone.

7. The process according to claims 1 to 6, in step (c) the isolation of the polymer composition as a solid being effected by precipitation of the polyarylene ether (P).

8. The process according to claims 1 to 7, in step (c) the isolation of the polymer composition as a solid being effected by precipitation as a result of the addition of the solution from step (b) to a mixture of water and N-methylpyrrolidone.

9. The process according to claims 1 to 8, a filtration of the polymer solution being carried out after stage (a) and before stage (b).

10. The process according to claims 1 to 9, the amount of the polyfunctional carboxylic acid added being from 25 to 200 mol%, based on the amount of phenolic terminal groups in the polyarylene ether (P).

11. The process according to claims 4 to 10, the molar ratio of the starting compounds A2/A1 at the beginning of the reaction according to step (a) being from 1.005 to 1.2.

12. The process according to claims 1 to 11, the polyfunctional carboxylic acid having a number average molecular weight of from 90 to 1500 g/mol.

## Revendications

1. Procédé de fabrication d'une composition polymère comprenant les étapes suivantes dans l'ordre a - b - c :
(a) la preparation d'au soins une polyéthersulfone d'arylène (P), qui est formée à partir de constituants de formulé générale I et dans laquelle plus de 50 % des groupes terminaux présents sont des groupes terminaux phénolate, en présence d'un solvant aprotique polaire (L) 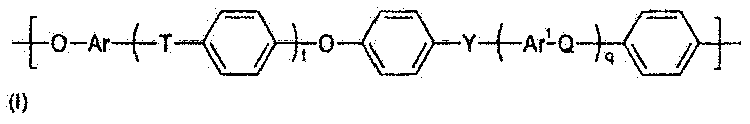 avec les significations suivantes
t, q : indépendamment l'un de l'autre 0, 1, 2 ou 3, Q, T, Y : chacun indépendamment les uns des autres une liaison chimique ou un groupe choisi parmi -O-, -S-, SO₂-, S=O, C=O, -N=N-, -CR^{a}R^{b}-, R^{a} et R^{b} représentant chacun indépendamment l'un de l'autre un atome d'hydrogène ou un groupe alkyle en C₁-C₁₂, alcoxy en C₁-C₁₂ ou aryle en C₆-C₁₈, au moins un radical parmi Q, T et Y étant différent de -O- et au moins un radical parmi Q, T et Y représentant -SO₂-, et
Ar, Ar¹ : indépendamment l'un de l'autre un groupe arylène de 6 à 18 atomes de carbone,
la polyéthersulfone d'arylène (P) étant préparée sous la forme d'une solution dans un solvant aprotique polaire,
(b) l'ajout d'au moins un acide carboxylique polyfonctionnel, et
(c) l'obtention de la composition polymère sous forme solide.

2. Procédé selon la revendication 1, dans lequel Ar = 1,4-phénylène, t = 1, q = 0, T = SO₂ et Y = SO₂.

3. Procédé selon les revendications 1 ou 2, dans lequel au moins 80 % des groupes terminaux du polyéther d'arylène ou des polyéthers d'arylène (P) sont des groupes terminaux phénolate.

4. Procédé de fabrication d'une composition polymère selon les revendication 1 à 3, dans lequel la preparation du polyéther d'arylène ou des polyéthers d'arylène (P) à l'étape (a) a lieu par mise en réaction d'au moins un composé de départ de structure X-Ar-Y (A1) avec au moins un composé de départ de structure HO-Ar¹-OH (A2) en présence d'un solvant (L) et d'une base (B),
- Y étant un atome d'halogène,
- X étant choisi parmi les atomes d'halogène et OH, et
- Ar et Ar¹ représentant indépendamment l'un de l'autre un groupe arylène de 6 à 18 atomes de carbone.

5. Procédé selon les revendications 1 à 4, dans lequel au moins un acide carboxylique polyfonctionnel choisi parmi l'acide succinique et l'acide citrique est ajouté selon l'étape (b).

6. Procédé selon les revendication 1 à 5, dans lequel la N-méthyl-2-pyrrolidone est utilisée en tant que solvant (L).

7. Procédé selon les revendications 1 à 6, dans lequel, à l'étape (c), l'obtention de la composition polymère sous forme solide a lieu par une precipitation du polyéther d'arylène (P).

8. Procédé selon les revendications 1 à 7, dans lequel, à l'étape (c), l'obtention de la composition polymère sous forme solide a lieu par précipitation en conséquence de l'ajout de la solution de l'étape (b) à un mélange d'eau et de N-méthylpyrrolidone.

9. Procédé selon les revendications 1 à 8, dans lequel une filtration de la solution de polymère est réalisée après l'étape (a) et avant l'étape (b).

10. Procédé selon les revendications 1 à 9, dans lequel la quantité de l'acide carboxylique polyfonctionnel ajouté est de 25 à 200 % en moles par rapport à la quantité de matière de groupes terminaux phénoliques dans le polyéther d'arylène (P).

11. Procédé selon les revendications 4 à 10, dans lequel le rapport molaire entre les composés de départ A2/A1 au début de la réaction selon l'étape (a) est de 1,005 à 1,2.

12. Procédé selon les revendications 1 à 11, dans lequel l'acide carboxylique polyfonctionnel présente un poids moléculaire moyeu en nombre de 90 à 1 500 g/mol.
